# EUROPÄISCHE PATENTANMELDUNG

(11) **EP 1 944 073 A1**
(43) Veröffentlichungstag der Anmeldung: **16.07.2008**
(21) Anmeldenummer: 07122448.9
(22) Anmeldetag: 06.12.2007
(51) Int. Cl.: B01D 46/00, B01D 46/24

(54) **Partikelfilter, insbesondere Abgas-Partikelfilter für eine Brennkraftmaschine**

(30) Priorität: 10.01.2007 DE 102007001561
(71) Anmelder: Robert Bosch GmbH, 70442 Stuttgart (DE)
(72) Erfinder: Mattern, Andreas, 76137 Karlsruhe (DE); Koch-Groeber, Hermann, 70469 Stuttgart (DE)

(57) **Zusammenfassung**

Ein Abgas-Partikelfilter für eine Brennkraftmaschine umfasst einen wabenartigen Filterkörper (18) mit abwechselnd angeordneten Einlasskanälen (28) und Auslasskanälen (30). Die Einlasskanäle (28) sind auf einer Auslassseite (24) und die Auslasskanäle (30) auf einer Einlassseite (22) jeweils durch einen Schließabschnitt (32, 34) verschlossen. Es wird vorgeschlagen, dass in oder an einem Einlasskanal-Endbereich (40), der unmittelbar stromaufwärts von dem Schließabschnitt (32) des Einlasskanals (28) angeordnet ist, ein Wärme-Abführelement (44), welches Wärme aus dem Einlasskanal-Endbereich (40) in einen auslassseitigen Bereich (24) abführt, und/oder ein Wärmereduktionselement (56, 60), welches in dem Einlasskanal-Endbereich (40) bei einer Oxidation abgelagerter Partikel (52) entstehende Wärme reduziert, vorhanden ist.

## Beschreibung

### Stand der Technik

Die Erfindung betrifft einen Partikelfilter, insbesondere einen Abgas-Partikelfilter für eine Brennkraftmaschine, nach dem Oberbegriff des Anspruchs 1.

Ein solcher Partikelfilter ist aus der DE 101 30 338 A1 bekannt. Bei diesem handelt es sich um einen keramischen Wabenfilter, der in einem Filterkörper eine Vielzahl von insgesamt in Strömungsrichtung verlaufenden wabenartigen Kanälen aufweist. Diese sind abwechselnd an ihrem stromaufwärtigen Ende, also im Bereich einer Einlassseite des Filterkörpers, beziehungsweise am stromabwärtigen Ende, also im Bereich einer Auslassseite des Filterkörpers, durch Schließabschnitte verschlossen. Hierdurch werden einzelne taschenartige Waben gebildet. Zwischen den einzelnen Kanälen sind poröse Filterwände angeordnet, durch die der Abgasstrom im Betrieb hindurchtritt. Rußpartikel werden hierdurch aus dem Abgas abgeschieden.

Die abgeschiedenen Rußpartikel führen zu einer Verringerung der Durchlässigkeit der Filterwände und infolgedessen zu einer Erhöhung des Druckabfalls, der beim Durchtritt des Abgasstroms durch die Filterwände auftritt. Entsprechend erhöht sich der sogenannte "Abgasgegendruck". Um den Wirkungsgrad der Brennkraftmaschine hoch zu halten, wird der Partikelfilter von Zeit zu Zeit regeneriert, indem die abgelagerten Rußpartikel oxidiert, also verbrannt werden. Für eine möglichst hohe Lebensdauer des Filterkörpers ist es wünschenswert, dass bei einer solchen Regeneration des Partikelfilters eine möglichst gleichmäßige Wärmeverteilung vorliegt, lokal überhöhte Temperaturen, sogenannte "Hot Spots" also vermieden werden.

### Offenbarung der Erfindung

Aufgabe der vorliegenden Erfindung ist es, einen Partikelfilter zu schaffen, bei dem Hot Spots während der Regenerierung möglichst nicht auftreten.

Diese Aufgabe wird durch einen Abgas-Partikelfilter mit den Merkmalen des Anspruchs 1 gelöst. Vorteilhafte Weiterbildungen sind in Unteransprüchen angegeben. Wichtige Merkmale finden sich darüber hinaus auch in der nachfolgenden Beschreibung und der Zeichnung, wobei diese Merkmale für die Erfindung in ganz unterschiedlichen Kombinationen wesentlich sein können, ohne dass hierauf jeweils explizit hingewiesen wird.

Erfindungsgemäß wurde erkannt, dass sich im Betrieb des Partikelfilters im Einlasskanal-Endbereich, also unmittelbar stromaufwärts vom Schließabschnitt eines Einlasskanals, mehr Partikel ablagern als weiter stromaufwärts im Einlasskanal. Grund hierfür kann beispielsweise sein, dass unter bestimmten Randbedingungen an den Innenwänden eines Einlasskanals abgelagerte Partikel abgelöst und dann bis zum Einlasskanal-Endbereich transportiert werden, so dass dort eine akkumulierte Menge an Partikeln vorliegt. Erfindungsgemäß wurde ferner erkannt, dass dann, wenn eine Regeneration durchgeführt wird, an solchen Stellen, an denen eine erhöhte Menge an Partikeln abgelagert ist, mehr Wärmeenergie freigesetzt wird als an anderen Stellen.

Hier greift die Erfindung an, indem vorgeschlagen wird, die Wärme aus diesem Einlasskanal-Endbereich bevorzugt abzuführen, so dass eine Überhitzung dieses Bereichs verhindert wird. Als Alternative wird erfindungsgemäß vorgeschlagen, die bei der Oxidation der Partikel in diesem Bereich entstehende Wärme zu reduzieren, so dass die bei der Regeneration entstehende Wärmeenergie im Einlasskanal-Endbereich nicht oder zumindest nicht wesentlich anders ist als andernorts. In allen Fällen wird die Temperatur lokal reduziert, so dass die erfindungsgemäß vorgesehenen Elemente auch verallgemeinernd als "Temperatur-Reduktoren" bezeichnet werden können.

Auf diese Weise werden Hot Spots, also eine lokale Überhitzung des Filterkörpers, zuverlässig vermieden. Die Lebensdauer des erfindungsgemäßen Partikelfilters wird auf diese Weise verbessert, da ein lokales Aufschmelzen des Filtermaterials unterbunden wird.

Im einfachsten Fall ist das Wärmeabführelement stabförmig und durchquert den Schließabschnitt. Auf diese Weise wird die im Einlasskanal-Endbereich entstehende Wärme auf kürzestem Wege abgeführt, und das Wärmeabführelement kann während der Fertigung des Filterkörpers problemlos in diesen eingebunden werden.

In Weiterbildung hierzu wird vorgeschlagen, dass das Wärmeabführelement im auslassseitigen Bereich einen Kühlabschnitt aufweist. Hierbei kann es sich beispielsweise um eine oder mehrere Kühlfahnen oder Kühlrippen handeln, die dann im Betrieb vom auslassseitigen gereinigten Abgasstrom umströmt werden. Ein solcher Kühlabschnitt arbeitet als "Wärmesenke", wodurch auch eine vergleichsweise große Wärmemenge sicher aus dem Einlasskanal-Endbereich abgeführt werden kann.

Eine Vergleichmäßigung der Wärmeverteilung im Filterkörper (in dessen radialer Richtung) wird erreicht, wenn die Kühlabschnitte mehrerer Wärmeabführelemente miteinander verbunden sind.

Eine besonders effektive Verringerung der Temperatur im Einlasskanal-Endbereich wird erreicht, wenn das Wärmeabführelement aus einem Material hergestellt ist, welches eine höhere Wärmeleitfähigkeit aufweist als das Material, welches wenigstens bereichsweise den Einlasskanal-Endabschnitt begrenzt.

Das Wärmeabführelement kann im einfachsten Fall in den Verschlussabschnitt integriert oder sogar durch diesen gebildet sein. Hierdurch werden die Herstellkosten des Partikelfilters reduziert.

Sehr effektiv kann die Wärme aus dem Einlasskanal-Endbereich abgeführt werden, wenn das Wärmeabführelement eine Heatpipe umfasst.

Die Länge eines in den Einlasskanal-Endbereich ragenden Abschnitts des Wärmeabführelements sollte zwischen null- und hundertmal der Weite des Einlasskanal-Endbereichs betragen. Dies sorgt für eine optimale Abfuhr der Wärme aus dem Einlasskanal-Endbereich, ohne zu viel Volumen innerhalb des Einlasskanals einzunehmen.

Das Wärmereduktionselement kann die in dem Einlasskanal-Endbereich bei einer Partikel-Oxidation entstehende Wärme auf besonders einfache Art und Weise dadurch reduzieren, dass es so angeordnet und dimensioniert ist, dass ein freies Volumen des Einlasskanal-Endbereichs reduziert wird, ohne dass dieses zu null wird. Auf diese Weise wird die Ruß-Speicherkapazität des Einlasskanal-Endbereichs beziehungsweise die dort ablagerbare Partikelmasse reduziert, was wiederum bei einer Regeneration die dort entstehende Wärme reduziert.

Eine einfache Möglichkeit, das freie Volumen des Einlasskanal-Endbereichs zu reduzieren, ohne die Permeabilität der den Einlasskanal begrenzenden Wand zu beeinflussen, besteht darin, dass das freie Volumen einen Ringraum bildet, oder, mit anderen Worten, dass das Wärmereduktionselement koaxial innerhalb des Einlasskanals angeordnet ist.

Auch das Wärmereduktionselement kann mit dem Verschlussabschnitt verbunden oder mit diesem einstückig sein. Dabei kann das Wärmereduktionselement aus dem gleichen Material hergestellt sein, aus dem auch der Verschlussabschnitt des Einlasskanals hergestellt ist, oder er kann aus einem anderen für den spezifischen Einsatzzweck besonders geeigneten Material hergestellt sein. Dies reduziert zum einen den Fertigungsaufwand und verbessert zum anderen die Wärmeleitung zum Verschlussabschnitt, so dass das Wärmereduktionselement zusätzlich auch noch eine Wärmeableitungsfunktion erfüllt. Das Wärmereduktionselement kann sogar in ein Wärmeabführelement der oben genannten Art integriert sein. Dann wird die Wärme aus dem Einlasskanal-Endbereich zur Auslassseite hin abgeführt und gleichzeitig das zum Sammeln von Partikel zur Verfügung stehende freie Volumen reduziert. Die Kombination aller dieser Maßnahmen führt zu einer besonders effektiven Reduktion der lokalen Temperaturerhöhung.

Das Wärmereduktionselement kann auch in der Art einer Auskleidung ausgebildet sein, die an der Wand des Einlasskanal-Endabschnitts angeordnet ist und die Gesamt-Permeabilität lokal reduziert. Dies hat zur Folge, dass die im Einlasskanal-Endabschnitt abgelagerten Partikel weniger stark durchströmt werden. Es wird also im Grunde das für die Oxidation erforderliche Oxidationsmittel verarmt, was eine geringere Oxidation zur Folge hat, wodurch letztlich wiederum weniger Wärme freigesetzt wird.

Wie bereits oben ausgeführt worden ist, kann das Wärmereduktionselement aus dem gleichen Material wie der Verschlussabschnitt hergestellt sein. Dies gilt auch für ein solches Wärmereduktionselement, welches in der Art einer Auskleidung angeordnet ist, denn die lokale Reduktion der Gesamt-Permeabilität der den Einlasskanal-Endabschnitt begrenzenden Wand kann auch einfach durch eine Vergrößerung der Wandstärke bewirkt werden. Neben der oben beschriebenen Wirkung einer Reduktion der exothermen Oxidationsreaktion hat die Verwendung einer Auskleidung auch noch die Wirkung, dass das für die Ablagerung von Partikeln vorhandene freie Volumen reduziert und, je nach Material, welches für die Auskleidung verwendet wird, außerdem die Wärmeleitung zum Schließabschnitt hin verbessert wird. Das Wärmereduktionselement in der Art einer Auskleidung könnte also auch die Funktionen der oben beschriebenen Elemente beinhalten.

Ein gemeinsamer Vorteil von Wärmeabführelement und Wärmereduktionselement liegt darin, dass hierdurch die Wärmekapazität der im Einlasskanal-Endbereich vorhandenen Masse erhöht wird, wodurch wiederum die im Einlasskanal-Endbereich auftretende Temperaturerhöhung, die sich aus der bei einer Oxidation entstehenden Wärme ergibt, reduziert wird.

### Kurze Beschreibung der Zeichnungen

Nachfolgend werden Ausführungsformen der vorliegenden Erfindung unter Bezugnahme auf die beiliegende Zeichnung näher erläutert. In der Zeichnung zeigen:
- Figur 1: eine schematische Darstellung einer Brennkraftmaschine mit einem Abgas-Partikelfilter;
- Figur 2: einen Längsschnitt durch einen Filterkörper des Abgas-Partikelfilters von Figur 1;
- Figur 3: eine vergrößerte Darstellung eines Einlasskanal-Endbereichs des Filterkörpers von Figur 2 mit einer ersten Ausführungsform eines Temperatur-Reduktors;
- Figur 4: eine Darstellung ähnlich Figur 3 mit einer zweiten Ausführungsform eines Temperatur-Reduktors; und
- Figur 5: eine Darstellung ähnlich Figur 3 mit einer dritten Ausführungsform eines Temperatur-Reduktors.

### Ausführungsform(en) der Erfindung

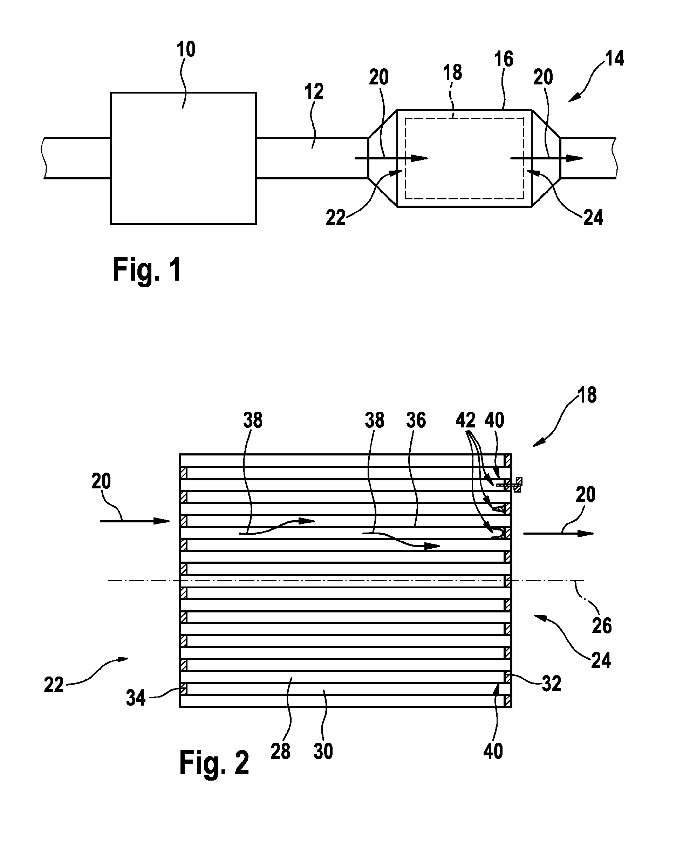

In Figur 1 trägt eine Brennkraftmaschine insgesamt das Bezugszeichen 10. Deren Abgase werden über ein Abgasrohr 12 einem Abgas-Partikelfilter 14 zugeführt. Mit diesem können im Betrieb der Brennkraftmaschine 10 Rußpartikel aus dem im Abgasrohr 12 strömenden Abgas herausgefiltert werden. Dies ist insbesondere bei Diesel-Brennkraftmaschinen erforderlich, um gesetzliche Bestimmungen einzuhalten.

Der Abgas-Partikelfilter 14 umfasst ein insgesamt im wesentlichen zylindrisches Gehäuse 16, in dem ein ebenfalls im wesentlichen zylindrischer Filterkörper 18 angeordnet ist. Bei diesem kann es sich beispielsweise um einen extrudierten Formkörper aus einem keramischen Material, beispielsweise Cordierit, handeln. Im Betrieb wird der Filterkörper 18 in Richtung der Pfeile 20 vom Abgas der Brennkraftmaschine 10 durchströmt. Eine Einlassseite des Filterkörpers 18 ist in Figur 1 insgesamt mit 22, eine Auslassseite insgesamt mit 24 bezeichnet.

Der prinzipielle Aufbau des Filterkörpers 18 geht aus Figur 2 hervor: Danach verlaufen parallel zu einer Längsachse 26 des Filterkörpers 18 in diesem eine Vielzahl von Einlasskanälen 28 und von Auslasskanälen 30. Aus Gründen der Übersichtlichkeit ist in Figur 2 jedoch nur jeweils ein Einlasskanal 28 und 30 exemplarisch mit Bezugszeichen versehen. Die Einlasskanäle 28 sind im Bereich der Auslassseite 24 mittels eines Schließabschnittes 32, auch "Stopfen" genannt, verschlossen. Die Auslasskanäle 30 wiederum sind im Bereich der Einlassseite 22 jeweils durch einen entsprechenden Schließabschnitt 34 verschlossen. Die Einlasskanäle 28 sind im Bereich der Einlassseite 22, die Auslasskanäle 30 im Bereich der Auslassseite 24 offen. Die Wände 36 zwischen den Einlasskanälen 28 und den Auslasskanälen 30 sind porös und weisen für das Abgas eine vergleichsweise hohe Permeabilität auf. Im Betrieb tritt das Abgas 20 zunächst in die Einlasskanäle 28 ein, tritt dann durch die Wände 36 hindurch, entsprechend den Pfeilen 38 in Figur 2, und tritt dann über die Auslasskanäle 30 aus dem Filterkörper 18 aus. Beim Durchtritt des Abgases durch die Wände 36 werden im Abgas vorhandene Rußpartikel auf der Innenseite der Einlasskanäle 28 abgelagert.

Um zu vermeiden, dass die auf den Innenseiten der Einlasskanäle 28 abgelagerten Rußpartikel die Durchlässigkeit der Wände 36 in unzulässiger Weise behindern, wird der Filterkörper 18 von Zeit zu Zeit "regeneriert". Dies bedeutet, dass die abgelagerten Rußpartikel verbrannt werden. Dies kann zum Beispiel geschehen, indem die Temperatur des Abgases 20, welches durch den Filterkörper 18 geleitet wird, durch motorische Maßnahmen der Brennkraftmaschine 10 erhöht wird. Beispielsweise kann eine zusätzliche Einspritzung von Kraftstoff erfolgen, dessen Verbrennung die Erhöhung der Abgastemperatur herbeiführt. Die abgelagerten Rußpartikel werden also periodisch durch eine exotherme Oxidationsreaktion zu gasförmigen Reaktionsprodukten abgebaut, welche dann durch die Wände 36 hindurch- und über die Auslasskanäle 30 und die Auslassseite 24 des Filterkörpers 18 aus diesem austreten können.

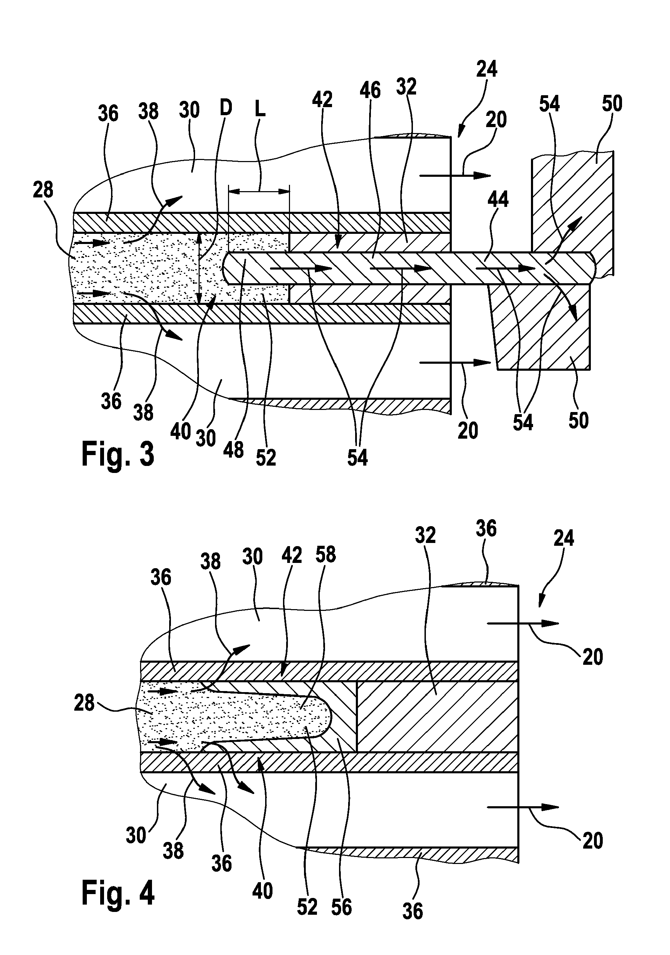

Es wurde festgestellt, dass bei dieser exothermen Oxidationsreaktion die Gefahr besteht, dass sich die Wände 36 im Bereich eines Endbereichs 40 eines Einlasskanals 28 besonders stark erwärmen und hierdurch an dieser Stelle ein sogenannter "Hot Spot" entsteht. Um die damit zusammenhängenden Probleme zu vermeiden, verfügt der Filterkörper 18 in den Einlasskanal-Endbereichen 40 über Temperatur-Reduktoren 42, von denen drei verschiedene Ausfizhrungsformen in Figur 2 schematisch und in den Figuren 3 bis 5 stärker im Detail dargestellt sind:

Eine erste Ausführungsform eines Temperatur-Reduktors 42 umfasst ein Wärmeabführelement 44, welches Wärme aus dem Einlasskanal-Endbereich 40 in den stromabwärts von der Auslassseite 24 des Filterkörpers 18 gelegenen Bereich abführt. Dieses in Figur 3 im Detail dargestellte Wärme-Abführelement 44 umfasst einen stabförmigen Zentralkörper 46, welcher den zugehörigen Schließabschnitt 32 durchquert und mit einem Abschnitt 48 in den Einlasskanal-Endbereich 40 ragt. Eine Länge L des Abschnitts 48 entspricht in etwa der Weite D des Einlasskanal-Endbereichs 40.

Im auslassseitigen Bereich weist das Wärme-Abführelement 44 eine Mehrzahl fahnenartig radial vom stabförmigen Zentralkörper 46 abragender Kühlabschnitte 50 auf. Die Kühlabschnitte benachbarter Wärme-Abführelemente 44 sind, was in Figur 2 jedoch nicht dargestellt ist, miteinander verbunden. Während die Wände 36 des Filterkörpers 18 und auch der Schließabschnitt 32 aus Cordierit hergestellt sind, wie bereits oben erwähnt wurde, ist das Wärme-Abführelement 44 aus einem hochtemperaturfesten, jedoch eine sehr hohe Wärmeleitfähigkeit aufweisenden Metall hergestellt. Die Wärmeleitfähigkeit des WärmeAbführelements 44 ist jedenfalls deutlich größer als die Wärmeleitfähigkeit des die Wände 36 und den Schließabschnitt 32 bildenden Cordierits.

Im normalen Betrieb der Brennkraftmaschine 10 werden im Einlasskanal 28, und insbesondere im Einlasskanal-Endbereich 40 Rußpartikel 52 abgelagert. Die Menge der im Einlasskanal-Endbereich 40 abgelagerten Rußpartikel 52 ist dabei im allgemeinen höher als in den weiter stromaufwärts gelegenen Bereichen des Einlasskanals 28. Bei der exothermen Oxidationsreaktion der im Einlasskanal-Endbereich 40 abgelagerten Rußpartikel 52 entsteht daher eine vergleichsweise große Wärmemenge. Diese kann durch das Wärme-Abführelement 44, wie durch die Pfeile 54 angedeutet ist, zuverlässig durch den Schließabschnitt 32 hindurch zur Auslassseite 24 hin abgeleitet werden.

In Figur 4 ist eine zweite Ausführungsform eines Temperatur-Reduktors 42 dargestellt. Dabei gilt hier wie nachfolgend, dass solche Elemente und Bereiche, die äquivalente Funktionen zu vorab beschriebenen Elementen und Bereichen aufweisen, die gleichen Bezugszeichen tragen und nicht nochmals im Detail erläutert sind.

Der in Figur 4 dargestellte Temperatur-Reduktor 42 ist als Wärmereduktionselement in der Art einer Auskleidung 56 an der Wand 36 des Einlasskanal-Endabschnitts 40 angeordnet. Er ist aus einem Material mit einer etwas geringeren Permeabilität als Cordierit hergestellt. In einem nicht dargestellten Ausführungsbeispiel könnte die Auskleidung 56 aber auch aus dem gleichen Material wie die Wände 36 und/oder der Schließabschnitt 32 hergestellt sein. Radial innerhalb der Auskleidung 56 wird ein Reservoir 58 gebildet, in dem die Rußpartikel 52 aufgenommen werden können.

Bei einer Regeneration des Filterkörpers 18 werden diese Rußpartikel 52, wie bereits oben beschrieben wurde, durch eine exotherme Oxidationsreaktion zu gasförmigen Reaktionsprodukten. Da die Permeabilität durch die Auskleidung 56 hindurch im Endbereich 40 des Einlasskanals 28 jedoch gegenüber dem restlichen Bereich des Einlasskanals 28 reduziert ist, steht für die Oxidationsreaktion im Einlasskanal-Endbereich 40 weniger Oxidationsmittel zur Verfügung als in den restlichen Bereichen des Einlasskanals 28. In der Folge wird bei der Oxidationsreaktion lokal im Einlasskanal-Endbereich 40 weniger Wärme freigesetzt, was die Temperaturerhöhung in diesem Bereich begrenzt.

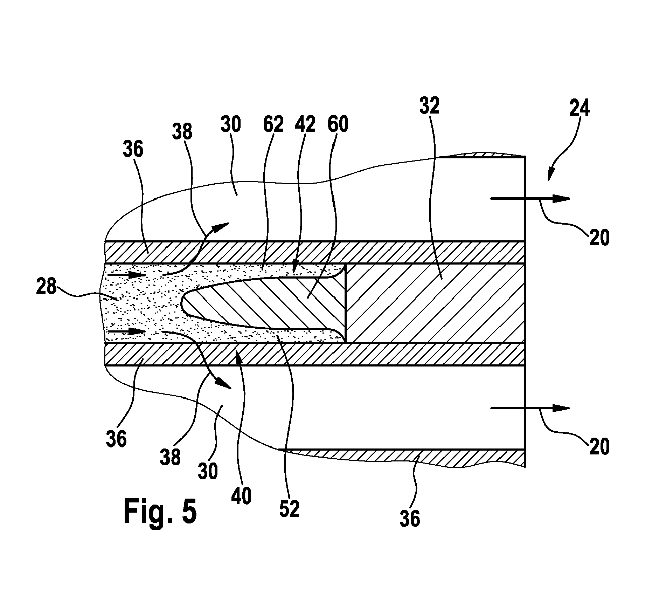

Bei der in Figur 5 dargestellten Ausführungsform eines Temperatur-Reduktors 42 handelt es sich um ein Wärmereduktionselement in der Art eines Verdrängerelements 60. Es hat die Gestalt eines Rotationskörpers, der am Schließabschnitt 32 des Einlasskanals 28 befestigt ist und in den

Einlasskanal-Endbereich 40 hineinragt. Zwischen dem Wärmereduktionselement 60 und der Wand 36 des Einlasskanal-Endbereichs 40 ist ein freies Volumen vorhanden, welches einen Ringraum 62 bildet. Ebenso wie bei dem vorhergehenden Ausführungsbeispiel kann das Wärmereduktionselement 60 aus dem gleichen Material hergestellt sein wie der Schließabschnitt 32, oder es kann aus einem anderen Material, beispielsweise mit höherer Wärmekapazität, hergestellt sein.

Im Betrieb der Brennkraftmaschine 10 wird durch das Wärmereduktionselement 60 das zur Ablagerung von Rußpartikeln 52 im Einlasskanal-Endbereich 40 zur Verfügung stehende freie Volumen auf den Ringraum 62 reduziert. Die verringerte Menge an abgelagerten Rußpartikeln 52 erzeugt bei einer Regeneration eine vergleichsweise geringe Wärmemenge, wodurch die lokale Temperaturerhöhung im Einlasskanal-Endbereich 40 begrenzt wird.

Zusätzlich zu den oben genannten Funktionen einer Wärmeableitung, einer Reduktion der exothermen Oxidationsreaktion, und/oder einer Verringerung der Menge der abgelagerten Rußpartikel 52 im Einlasskanal-Endbereich 40, hat der Einsatz der oben genannten Temperatur-Reduktoren 42 auch noch die Wirkung, dass die Wärmekapazität im Einlasskanal-Endbereich 40 erhöht wird, was die Temperaturerhöhung des Bereichs ebenfalls reduziert. Auch kann durch die Wärmereduktionselemente 56 und 60 eine Wärmeleitung zum Schließabschnitt 32 bewirkt werden, und durch das Wärme-Abführelement 44 kann das für die Aufnahme von Rußpartikeln 52 zur Verfügung stehende freie Volumen reduziert werden. Man erkennt also, dass beliebige Kombinationen der gezeigten Temperaur-Reduktoren 42 möglich sind.

## Patentansprüche

1. Partikelfilter (14), insbesondere Abgas-Partikelfilter für eine Brennkraftmaschine (10), mit einem wabenartigen Filterkörper (18) mit abwechselnd angeordneten Einlasskanälen (28) und Auslasskanälen (30), wobei die Einlasskanäle (28) auf einer Auslassseite (24) und die Auslasskanäle (30) auf einer Einlassseite (22) jeweils durch einen Schließabschnitt (32, 34) verschlossen sind, **dadurch gekennzeichnet, dass** in oder an einem Einlasskanal-Endbereich (40), der unmittelbar stromaufwärts von dem Schließabschnitt (32) des Einlasskanals (28) angeordnet ist, ein Wärmeabführelement (44), welches Wärme aus dem Einlasskanal-Endbereich (40) in einen auslassseitigen Bereich (24) abführt, und/oder ein Wärmereduktionselement (56; 60), welches in dem Einlasskanal-Endbereich (40) bei einer Oxidation abgelagerter Partikel (52) entstehende Wärme reduziert, vorhanden ist.

2. Partikelfilter (14) nach Anspruch 1, **dadurch gekennzeichnet, dass** das Wärmeabführelement (44) stabförmig ist und den Schließabschnitt (32) durchquert.

3. Partikelfilter (14) nach Anspruch 2, **dadurch gekennzeichnet, dass** das Wärmeabführelement (44) im auslassseitigen Bereich (24) mindestens einen Kühlabschnitt (50) aufweist.

4. Partikelfilter (14) nach Anspruch 3, **dadurch gekennzeichnet, dass** die Kühlabschnitte (50) mehrerer Wärmeabführelemente (44) miteinander verbunden sind.

5. Partikelfilter (14) nach einem der vorhergehenden Ansprüche, dass das Wärmeabführelement (44) aus einem Material hergestellt ist, welches eine höhere Wärmeleitfähigkeit aufweist als das Material, welches wenigstens bereichsweise den Einlasskanal-Endabschnitt (40) begrenzt.

6. Partikelfilter (14) nach einem der vorhergehenden Ansprüche, **dadurch gekennzeichnet, dass** das Wärmeabführelement (44) in den Schließabschnitt (32) integriert oder durch diesen gebildet ist.

7. Partikelfilter (14) nach einem der vorhergehenden Ansprüche, **dadurch gekennzeichnet, dass** das Wärmeabführelement (44) eine Heatpipe umfasst.

8. Partikelfilter (14) nach einem der vorhergehenden Ansprüche, **dadurch gekennzeichnet, dass** die Länge (L) eines in den Einlasskanal-Endbereich (40) ragenden Abschnitts (48) des Wärmeabführelements (44) zwischen null- und hundertmal der Weite (D) des Einlasskanal-Endbereichs (40) beträgt.

9. Partikelfilter (14) nach einem der vorhergehenden Ansprüche, **dadurch gekennzeichnet, dass** das Wärmereduktionselement (60) in der Art eines Verdrängerelements so angeordnet und dimensioniert ist, dass ein freies Volumen (62) des Einlasskanal-Endbereichs (40) reduziert, jedoch deutlich größer Null ist.

10. Partikelfilter (14) nach Anspruch 9, **dadurch gekennzeichnet, dass** das freie Volumen einen Ringraum (62) bildet.

11. Partikelfilter (14) nach einem der Ansprüche 9 oder 10, **dadurch gekennzeichnet, dass** das Wärmereduktionselement (56; 60) mit dem Schließabschnitt (32) verbunden oder mit diesem einstückig ist.

12. Partikelfilter nach einem der Ansprüche 9 bis 11, **dadurch gekennzeichnet, dass** das Wärmereduktionselement in ein Wärmeabführelement nach einem der Ansprüche 2 bis 7 integriert ist.

13. Partikelfilter (14) nach einem der Ansprüche 9 bis 12, **dadurch gekennzeichnet, dass** das Wärmereduktionselement (56) in der Art einer Auskleidung an der Wand (36) des Einlasskanal-Endbereichs (40) angeordnet ist und die Gesamt-Permeabilität lokal reduziert.

14. Partikelfilter (14) nach einem der Ansprüche 9 bis 13, **dadurch gekennzeichnet, dass** das Wärmereduktionselement (56; 60) aus dem gleichen Material wie der Schließabschnitt (32) hergestellt ist.

15. Partikelfilter (14) nach einem der Ansprüche 9 bis 13, **dadurch gekennzeichnet, dass** das Wärmereduktionselement (56; 60) aus einem anderen Material wie der Schließabschnitt (32) hergestellt ist.
